# EUROPEAN PATENT SPECIFICATION

(11) **EP 1 021 811 B1**
(45) Date of publication and mention of the grant of the patent: **24.03.2004**
(21) Application number: 97901290.3
(22) Date of filing: 07.01.1997
(51) Int. Cl.: H01F 27/28, H01F 36/00

(54) **SUPERCONDUCTING CORELESS TRANSFORMER**
SUPRALEITENDER TRANSFORMATOR OHNE KERN
TRANSFORMATEUR SUPRACONDUCTEUR SANS NOYAU

(30) Priority: 18.01.1996 SE 9600173
(43) Date of publication of application: 26.07.2000
(73) Proprietor: ABB AB, 721 83 Västeras (SE)
(72) Inventor: ASPLUND, Gunnar, S-771 32 Ludvika (SE)
(74) Representative: Dahlstrand, Björn
(86) International application number: PCT/SE1997/000011
(87) International publication number: WO 1997/026668

(56) References cited:
- EP-A- 0 676 777

## Description

### TECHNICAL FIELD

The present invention relates to a transformer with superconducting windings and without an iron core. Designing a transformer with superconducting windings without an iron core entails special problems as regards insulation, magnetization current, losses, etc. A coreless transformers with superconducting windings, however, entails advantages which contribute to make such a transformer both less expensive and less heavy than a conventional transformer for the same power. Because of the costs associated with installations for achieving a superconducting state of the windings, however, transformers currently available primarily belong to the category of power transformers.

### BACKGROUND ART, PROBLEMS

There are a number of publications describing the design and testing of transformers with an iron core and superconducting windings. As an example of the state of the art with regard to such transformers, reference is made to an article entitled "POWER TRANSFORMER WITH SUPERCONDUCTING WINDINGS", published in IEEE TRANS ON MAGNETICS, Vol. 2, No. 6, November 1993, pp. 3356-3358, (A).

There are also a number of publications dealing with coreless transformers with superconducting windings: As examples there may be mentioned here "Loss Characteristics of Air-Core Superconducting Transformers", published in IEEE TRANS ON MAGNETICS, Vol. 28, No. 5, September 1992, pp. 2232-2234 (B), "Volt-Ampere Rating of Air-Core Superconducting Power Transformers", published in IEEE TRANS ON MAGNETICS, Vol. 29, No. 6, November 1993, pp. 3592-3594 (C), and "Conceptual Design of Air-Core Superconducting Power Transformer for Cable Transmission System", presented at IEEE/PES Summer Meeting, July 23-27, 1995, Portland, OR (95 SM 610-6 PWRD), pp. 1-7 (D).

The primary reason for the desire to use superconducting windings in a transformer is the possibility this permits to a considerable increase of the current density in the windings. In the windings of a conventional oil-cooled transformer, it is possible to work with a current density of 2.5-4 A/mm². Because of insulation and the necessary cooling channels, however, the mean current density across the entire winding cross section is reduced to 1-2 A/mm². This in turn means that the magnetic field in the main channel is limited to 1 T for a pair of windings in which each winding has a thickness of 0.4-0.7 m. Then, assuming that the copper area only constitutes about 20-25 % of the opening of the core window, the current density will only be 0.5-1 A/mm² in this window.

By using as winding material high-temperature superconductors (HTSC), the conditions may be radically changed, since their conductivity exceeds that of copper by one to two orders of magnitude. With such a current density, however, a superconducting winding will need some form of mechanical support which will occupy a certain space. From a purely practical point of view, a change to a superconducting winding means that an effective current density of 10-100 A/mm² across the winding cross section could be counted on.

As will have been clear from the cited references, replacing a transformer winding operating at a normal operating temperature with a superconducting winding is part of the state of the art and belongs to those problems which can be overcome in a relatively satisfactory manner. The problems which remain if a change to a coreless transformer is to be made is that the no-load current of the transformer with a conventional design of the windings may amount to 30-90 % of the rated current of the transformer. One way of reducing the no-load current, however, may be to increase the number of turns in the winding. Unfortunately, however, this results in most cases in an unacceptably high short-circuit reactance.

In the above-mentioned reference (B), the loss characteristics of coreless transformers with a superconducting winding have been studied. To this end, an equivalent transformer circuit has been obtained. To verify the theoretical calculations, an experimental transformer with four mutually insulated and concentrically disposed sub-windings has been produced.

In the above-mentioned reference (C), the primary volt-ampere ratings of a coreless transformer with a superconducting winding have been studied, based on the equivalent transformer circuit obtained in reference (B). Coreless superconducting windings may be advantageously used as shunt reactors in networks with a large capacitive load. In reference (C), the ratings of coreless superconducting windings, such as a shunt reactor, have also been studied with the same equivalent diagram. To verify the calculated values, the experimental transformer according to reference (B) has been used.

Reference (D) presents still another method of calculation, based on the equivalent transformer circuit from reference (B), for a coreless transformer with superconducting windings on the basis of given electrical data. The method shows that the size of such a transformer is smaller and its weight considerably smaller than for a conventionally wound transformer with an iron core with corresponding electrical data. The reduced size and weight become still more accentuated for a corresponding shunt reactor.

An important conclusion which can be drawn from the test results with an experimental transformer described in reference (D) is that the losses in a coreless transformer with superconducting windings tend to become constant independently of the load current at high magnetic coefficients of inductive coupling between the windings. This means that the transformers should be designed to obtain as low no-load losses as possible. To achieve this, the experimental transformer comprises five windings, of which the primary winding, in this case the high-voltage winding, consists of two concentric inner and two concentric outer sub-windings, and where the intermediate fifth winding is the secondary winding of the transformer.

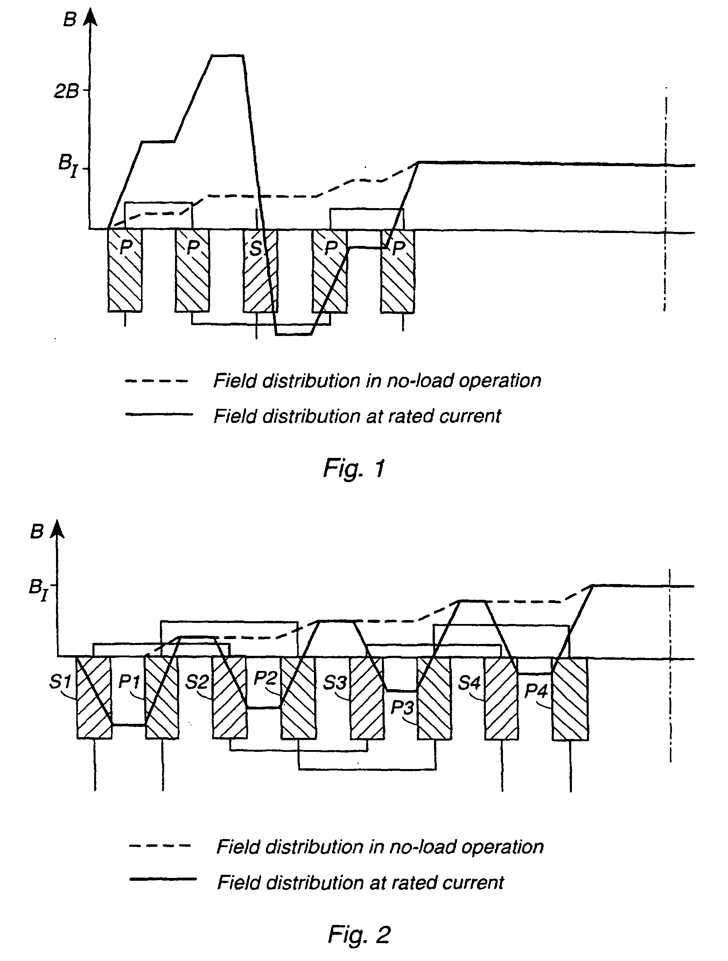

By dividing the primary winding, as in reference (D), into four sub-windings, that is, with a height corresponding to one-fourth of the height compared to the case with one primary winding only, the inductance which the supply source senses at no-load operation will be higher when these sub-windings are connected together so that the fields caused thereby are summed in the central cavity. This is due to the fact that the stored energy is proportional to the field strength squared, multiplied by the enclosed volume. The division into four sub-windings means that the field strength increases by a factor of four and the enclosed volume decreases by a factor of four. Thus, the no-load current will substantially decrease by a factor of two. The field distribution, in a section through one half of the windings, at no-load operation of a transformer according to (D), that is, with the primary winding divided into four sub-windings, is largely clear from the broken line in Figure 1 where B₁ corresponds to the field in the inner central cavity of the transformer. In the figure it has been assumed that the radial space between the sub-windings and between the sub-windings and the secondary winding for insulation and mechanical stability of the windings is equal to the radial space for the windings.

As mentioned above, coreless transformers with a conventional winding design in most cases result in problems with a high short-circuit reactance: If a secondary winding is placed inside or outside the sub-windings in a transformer according to reference (D), both the reactive power at rated current and the short-circuit reactance of the transformer will also be four times higher than if the primary winding is not divided. Both of these quantities are, however, reduced by placing the secondary winding, as in reference (D), between the sub-coils in the divided primary winding. This results in a field configuration at rated current which is clear from the unbroken line in Figure 1. This means that, in relation to a conventional winding design, a coreless transformer with a divided primary winding and a secondary winding between the midmost sub-windings will have lower short-circuit reactance and reactive power, respectively.

### BRIEF DESCRIPTION OF THE DRAWING

Figure 1 shows the field distribution of a coreless transformer with a primary winding divided into four parts, consisting of two inner and two outer layers, and with an intermediate secondary winding.

Figure 2 shows the field distribution of a coreless transformer with a primary winding divided into four parts and a secondary winding divided into four parts, wherein the sub-windings are interleaved.

### SUMMARY OF THE INVENTION, EMBODIMENTS

Especially in power transformers it is usually desirable, in addition to being able to maintain a relatively low no-load current, also to have a relatively low reactive power and a low short-circuit reactance, respectively. The present invention relates to a winding design which, in relation to the state of the art described above, permits an additionally reduced reactive power for coreless power transformers with superconducting windings. This can be done by allowing the secondary winding also to consist of a number of sub-windings, corresponding to the number of sub-windings with which the primary winding is designed, the sub-windings of the secondary windings being interleaved with the sub-windings of the primary winding. Thus, in an embodiment according to Figure 2, the interleaving means that the winding package is composed of, counting from the outside, a secondary sub-winding, S1, space for insulation and mechanical support, a primary sub-winding, P1, space for insulation and mechanical support, a secondary sub-winding, S2, space for insulation and mechanical support, a primary sub-winding, P2, etc., depending on how many sub-windings the winding package consists of. In another embodiment, the winding package may be composed of, counting from the outside, a primary sub-winding, space for insulation and mechanical support, a secondary sub-winding, etc. As mentioned above, the interconnection between the sub-windings shall be such that the fields caused thereby are summed in the inner central cavity.

The field distribution, in a section through one half of the windings, both in no-load operation and at rated current for a transformer according to the invention with an embodiment according to Figure 2, that is, with both the primary winding and the secondary winding divided into four sub-windings and with interleaved windings, is largely clear from the figure. Also here, B₁ corresponds to the field in the central inner cavity of the transformer. The field distribution in no-load operation is shown by the broken line and the field distribution at rated current is shown by the unbroken line.

The scope of the invention allows for the windings to be divided into less than four and more than four sub-windings, respectively. If one of the windings is divided into "n" windings, the other winding may be divided into "n+1" windings.

## Claims

1. A coreless transformer with a superconducting primary and secondary winding, **characterized in that** both the primary and the secondary winding are divided into a number of sub-windings (P1, P2, ..., S1, S2,...) and wherein the sub-windings of the primary winding are concentrically interleaved with the sub-windings of the secondary winding forming an interleaved winding package (P1, S1, P2, S2,...).

2. A coreless transformer with a superconducting primary and secondary winding according to claim 1, **characterized in that** both the primary and the secondary winding are divided into an equal number, n, of sub-windings (P1, P2, ..., Pn, S1, S2,..., Sn).

3. A coreless transformer with a superconducting primary and secondary winding according to claim 1, **characterized in that** the primary winding is divided into one sub-winding, n+1, more than the secondary winding, n, (P1, P2, ..., Pn, Pn+1, S1, S2,...,Sn).

4. A coreless transformer with a superconducting primary and secondary winding according to claim 1, **characterized in that** the secondary winding is divided into one sub-winding, n+1, more than the primary winding, n, (P1, P2, ..., Pn, S1, S2,..., Sn, Sn+1).

5. A coreless transformer with a superconducting primary and secondary winding according to claim 1, **characterized in that** the outermost sub-winding of the interleaved winding package is one of the sub-windings (P1) of the primary winding.

6. A coreless transformer with a superconducting primary and secondary winding according to claim 1, **characterized in that** the outermost sub-winding of the interleaved winding package is one of the sub-windings (S1) of the secondary winding.

## Patentansprüche

1. Kernloser Transformator mit einer supraleitenden primären und sekundären Wicklung, **dadurch gekennzeichnet, dass** sowohl die primäre als auch die sekundäre Wicklung in eine Anzahl von Unterwicklungen (P1, P2, ..., S1, S2, ...) aufgeteilt sind und worin die Unterwicklungen der primären Wicklung konzentrisch mit den Unterwicklungen der sekundären Wicklung verschachtelt sind, so dass sie ein verschachteltes Wicklungspaket (P1, S1, P2, S2, ...) bilden.

2. Kernloser Transformator mit einer supraleitenden primären und sekundären Wicklung gemäß Anspruch 1, **dadurch gekennzeichnet, dass** sowohl die primäre als auch die sekundäre Wicklung in eine gleiche Anzahl n von Unterwicklungen aufgeteilt sind (P1, P2, ..., Pn, S1, S2, ..., Sn).

3. Kernloser Transformator mit einer supraleitenden primären und sekundären Wicklung gemäß Anspruch 1, **dadurch gekennzeichnet, dass** die primäre Wicklung in eine Unterwicklung, n+1, mehr aufgeteilt ist als die sekundäre Wicklung, n, (P1, P2, ..., Pn, Pn+1, S1, S2, ..., Sn).

4. Kernloser Transformator mit einer supraleitenden primären und sekundären Wicklung gemäß Anspruch 1, **dadurch gekennzeichnet, dass** die sekundäre Wicklung in eine Unterwicklung, n+1, mehr aufgeteilt ist als die primäre Wicklung, n, (P1, P2, ..., Pn, S1, S2, ..., Sn, Sn+1).

5. Kernloser Transformator mit einer supraleitenden primären und sekundären Wicklung gemäß Anspruch 1, **dadurch gekennzeichnet, dass** die äusserste Unterwicklung des überlappenden Wicklungspakets eine der Unterwicklungen (P1) der primären Wicklung ist.

6. Kernloser Transformator mit einer supraleitenden primären und sekundären Wicklung gemäß Anspruch 1, **dadurch gekennzeichnet, dass** die äusserste Unterwicklung des überlappenden Wicklungspakets eine der Unterwicklungen (S1) der sekundären Wicklung ist.

## Revendications

1. Transformateur sans noyau ayant un enroulement supraconducteur primaire et secondaire, **caractérisé en ce que** tant l'enroulement primaire que l'enroulement secondaire sont subdivisés en un certain nombre de sous-enroulements (P1, P2, ..., S1, S2, ...) et les sous-enroulements de l'enroulement primaire sont imbriqués concentriquement avec les sous-enroulements de l'enroulement secondaire en formant un bobinage (P1, S1, P2, S2, ...) imbriqué.

2. Transformateur sans noyau ayant un enroulement supraconducteur primaire et secondaire, **caractérisé en ce que** tant l'enroulement primaire que l'enroulement secondaire sont subdivisés en un nombre égal n de sous-enroulements (P1, P2, ..., Pn, S1, S2, ..., Sn).

3. Transformateur sans noyau ayant un enroulement supraconducteur primaire et secondaire suivant la revendication 1, **caractérisé en ce que** l'enroulement primaire est subdivisé en un sous-enroulement n+1 de plus que l'enroulement secondaire n (P1, P2, ..., Pn, Pn+1, S1, S2, ..., Sn).

4. Transformateur sans noyau ayant un enroulement supraconducteur primaire et secondaire suivant la revendication 1, **caractérisé en ce que** l'enroulement secondaire est subdivisé en un sous-enroulement n+1 de plus que l'enroulement primaire n (P1, P2, ..., Pn, S1, S2, ..., Sn, Sn+1).

5. Transformateur sans noyau ayant un enroulement supraconducteur primaire et secondaire suivant la revendication 1, **caractérisé en ce que** le sous-enroulement le plus à l'extérieur du bobinage imbriqué est l'un des sous-enroulements (P1) de l'enroulement primaire.

6. Transformateur sans noyau ayant un enroulement supraconducteur primaire et secondaire suivant la revendication 1, **caractérisé en ce que** le sous-enroulement le plus à l'extérieur du bobinage imbriqué est l'un des sous-enroulements (S1) de l'enroulement secondaire.
